# EUROPÄISCHE PATENTANMELDUNG

(11) **EP 4 454 905 A1**
(43) Veröffentlichungstag der Anmeldung: **30.10.2024**
(21) Anmeldenummer: 24163240.5
(22) Anmeldetag: 13.03.2024
(51) Int. Cl.: B60G 11/27, F16F 9/05, F16F 9/32

(54) **LUFTFEDER**

(30) Priorität: 25.04.2023 DE 102023203822
(71) Anmelder: ContiTech Deutschland GmbH, 30175 Hannover (DE)
(72) Erfinder: Reck, Siegfried, 30175 Hannover (DE)
(74) Vertreter: Continental Corporation

(57) **Zusammenfassung**

Die vorliegende Erfindung betrifft eine Luftfeder (1) mit einem Balg (11), welcher ein Innenvolumen (A) der Luftfeder (1) zumindest abschnittsweise einschließt. Die Luftfeder (1) ist gekennzeichnet durch wenigstens ein Sensorsystem (2) mit
• einem akustischen Impulsgeber (21), welcher angeordnet und ausgebildet ist, akustische Impulse in das Innenvolumen (A) abzugeben,
• einem Schallempfänger (23), welcher angeordnet und ausgebildet ist, die entsprechenden akustischen Impulsantworten aus dem Innenvolumen (A) zu erfassen, und
• mit einer Steuerungseinheit (26) oder Auswerteeinheit (28), welche ausgebildet ist, ein Signal, welches die erfassten akustischen Impulsantworten repräsentiert, zu erhalten,
wobei das Sensorsystem (2), vorzugsweise die Steuerungseinheit (26) oder die Auswerteeinheit (28), ausgebildet ist,
• • aus den erfassten akustischen Impulsantworten das Leistungsdichte-Spektrum der akustischen Impulsantwort zu bestimmen und
• • basierend auf dem Leistungsdichte-Spektrum der akustischen Impulsantwort den Federweg des Innenraums (A) zu bestimmen.

## Beschreibung

Die vorliegende Erfindung betrifft eine Luftfeder gemäß dem Patentanspruch 1.

Zur Dämpfung von Schwingungen können je nach Anwendung verschiedene Arten von Federungssystemen eingesetzt werden. Hierzu gehören auch die Luftfederungen, welche die Kompressibilität von Gasen und insbesondere von Luft ausnutzen.

Eine weit verbreitete Bauart einer Luftfederung sind Luftfedern mit konstantem Volumen in Regellage. In diesem Fall wird die Luft üblicherweise in einem Rollbalg, kurz Balg, eingeschlossen, welcher mit weiteren Beschlagteilen wie bei Straßenfahrzeugen mit einem Deckel oder einer Bördelplatte und einem Abrollkolben luftdicht verbunden ist. Dabei ist der Kolben sowohl mit dem unteren Ende des Rollbalgs als auch üblicherweise mit einer Achse bei Straßenfahrzeugen bzw. mit einem Fahrgestell bei Schienenfahrzeugen verbunden. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Alternativ kann auch ein Faltenbalg verwendet werden, dessen Bewegung aus der Stauchung der Falten resultiert. Der Begriff "Balg" kann bei Luftfedern somit sowohl für Rollbalge als auch für Faltenbalge verwendet werden.

Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten. Derartige Luftfedern werden bei verschiedenen Arten von Fahrzeugen wie insbesondere bei Straßenfahrzeugen wie insbesondere Personenkraftwagen (Pkw), Lastkraftwagen (Lkw), Anhänger und Omnibussen sowie insbesondere bei Schienenfahrzeugen eingesetzt.

Mit anderen Worten erzeugen die an Nutzfahrzeugachsen verwendeten Luftfedern durch Beaufschlagung mit Druckluft eine Tragkraft und ermöglichen hierdurch eine gefederte Relativbewegung zwischen den Achsen bzw. dem Fahrgestell und dem Aufbau. Dies gilt sowohl für Straßen- als auch für Schienenfahrzeuge. Derartige Luftfedern können aber auch in der Schwingungsisolation von Industrieanlagen oder Gebäuden sowie als pneumatisch aktives Element in Industrieanlagen eingesetzt werden.

Zum Betrieb einer Luftfeder kann es vorteilhaft oder sogar erforderlich sein, eine Positionsbestimmung vorzunehmen, d.h. einen Abstand z.B. zwischen dem Kolben und dem Deckel bzw. der Bördelplatte messtechnisch zu bestimmen. Hieraus kann das Maß der Einfederung der Luftfeder bzw. die Federhöhe der Luftfeder bestimmt und hierauf basierend der Luftdruck im Innenvolumen der Luftfeder eingestellt bzw. geregelt werden.

Bekannt und am weitesten verbreitet sind Messsysteme zur Bestimmung der Federhöhe von Luftfedern, die mit einem Drehwinkel-Sensor arbeiten, der über ein gelenkiges Gestänge mit den beiden Enden der Luftfeder verbunden ist. Das Gestänge bildet die Federhöhe auf einen Drehwinkel ab, der von Drehwinkel-Sensor gemessen wird.

Diese Anordnung zu Messung der Federhöhe hat folgende Nachteile:
- Sie ermöglicht prinzipbedingt eine relative Messung bezogen auf eine nominelle Betriebshöhe und muss daher in der Betriebsumgebung kalibriert werden.
- Wegen der Übersetzung durch das gelenkige Gestänge weist diese Anordnung eine stark nichtlineare Kennlinie auf, was die Auswertung erschwert und bzw. oder fehleranfällig macht.
- Lagerspiel und Reibung in den Gelenken führen zu Hysterese in den Messwerten.
- Bei Verformungen des Gestänges verschiebt sich der Arbeitspunkt der Regelung.

Um die o.g. Nachteile derartiger mechanischer Messysteme zu vermeiden, wurden berührungslos arbeitende Sensoren entwickelt, die in die Luftfeder integriert werden können. Dazu gehören Systeme, die mit Hilfe von Ultraschallwellen oder elektromagnetischen Wellen (Mikrowelle, RADAR, Licht) den geometrischen Abstand zwischen den beiden Enden der Luftfeder messen. Diese Sensoren arbeiten mit Sende-/Empfängern, die ein Signal von einem Ende der Luftfeder aussenden und das von dem anderen Ende reflektierte Signal auswerten (z. B. die Laufzeit, den Reflexionsfaktor oder den Einfallswinkel).

Den Vorteilen der berührungslosen Messung und der höheren Messgenauigkeit stehen folgende Nachteile gegenüber:
- Diese Sensoren erfordern in der Regel konstruktive Veränderungen an dem reflektierenden Ende der Luftfeder, wie z. B. den Einsatz von Reflektoren (Ultraschall, Licht) und Resonatoren (Feldkopplung).
- Die reflektierenden Elemente müssen ggf. an den verfügbaren Bauraum angepasst werden.
- Insbesondere bei den strahlungsbasierten Sensoren (Ultraschall und Licht) muss der Raum zwischen dem Sende-/Empfänger und dem Reflektor frei sein von Festkörpern, die den Strahl ablenken oder streuen.
- Strahlungsbasierte Sensoren können häufig nicht die gesamte Federhöhe erfassen, insbesondere bei starker Verwinklung zwischen dem Kolben und der Anschlussplatte der Luftfeder und bei starkem Querversatz.
- Die Elektronik der Sende-/Empfänger ist aufwendig und daher teuer.

Mit anderen Worten ist es zur Bestimmung des Abstands zwischen dem Kolben und dem Deckel bzw. der Bördelplatte als Federhöhe auch bekannt, zusätzliche externe Sensoren zu verwenden, welche außen an der Luftfeder und am Balg vorbei mittels akustischer oder optischen Sensoren die Abstandserfassung durchführen.

Nachteilig ist hierbei, dass bei akustisch messenden Sensoren der hohe Einfluss der Temperatur kompensiert werden muss. Auch ist der Sensor den Störgeräuschen der Luftströmung durch die Luftzu- und -ableitung ausgesetzt. Optisch messenden Sensoren sind auf sehr saubere und trockene Luft angewiesen, da Kondensat und Schmutz zu Problemen in der Messstrecke führen können. Sind diese Voraussetzungen nicht erfüllt bzw. liegen diese Störeinflüsse in einem gewissen Maße vor, so kann das Messergebnis zu ungenau werden, um es sinnvoll verwenden zu können.

Aus der DE 10 2013 108 593 A1 ist eine Luftfeder bekannt, insbesondere für eine Luftfederanlage eines Fahrzeugs, mit einem Luftfederbalg, mit einem relativ zu wenigstens einem Teilbereich des Luftfederbalgs bewegbaren Kolben, und mit wenigstens einer optischen Erfassungseinrichtung zum Erfassen einer Position des Kolbens relativ zum Luftfederbalg, wobei die optische Erfassungseinrichtung als 3D-Kamera ausgebildet ist. Eine 3D-Kamera kann eine besonders präzise Erfassung des Abstands bzw. der Position ermöglichen, sodass die Gefahr von Fehlaussagen über die Position des Kolbens geringgehalten werden kann. Ferner kann die Erfassung mittels der 3D-Kamera besonders robust gegenüber etwaiger Verschmutzung innerhalb des Luftfederbalgs sein. Darüber hinaus kann der Abstand bzw. die Position des Kolbens mittels der 3D-Kamera ohne ein am Kolben vorgesehenes Reflektorelement präzise erfasst werden. Die 3D-Kamera ist beispielsweise als Stereo-Kamera oder aber als PMD-Kamera ausgebildet (PMD - photonic mixing device). Eine solche PMD-Kamera umfasst wenigstens einen PMD-Sensor.

Nachteilig ist hierbei jedoch, dass die Verwendung einer 3D-Kamera selbst sowie die entsprechende Auswertung der 3D-Bilddaten einen vergleichsweise hohen Aufwand verursachen kann. Dies kann die Umsetzung dieser Art der Positionserfassung aufgrund der Kosten in der Praxis unattraktiv machen. Auch können die optisch erfassten Bilder durch Verschmutzungen und dergleichen in der Qualität derart beeinträchtigt werden, dass das Messergebnis verfälscht werden kann.

Die DE 10 2016 118 576 A1 beschreibt eine Schaltventileinheit für eine Luftfedereinheit einer Luftfederanlage, mit einem Gehäuse, in welchem ein Anschlusskanal mit einem Ventilanschluss vorgesehenen ist, welcher mit einem Luftfederanschluss in einer Abdeckung einer Luftfeder der Luftfedereinheit fluidisch verbindbar ist, wobei im Bereich des Anschlusskanals eine Aufnahme für eine Sensoreinheit vorgesehen ist, mittels welcher wenigstens ein Parameterwert über den Ventilanschluss ermittelbar ist. Die Sensoreinheit ist ein Höhensensor, welcher auf einer Abstandserfassung mittels Laser gegenüber einem Reflektorelement basiert.

Nachteilig ist hierbei, dass die Höhenmessung mittels Laserstrahls ein entsprechendes Reflektorelement erfordert, was einen zusätzlichen Aufwand darstellt. Auch kann eine ungenaue Positionierung und bzw. oder Ausrichtung des Reflektorelements, insbesondere im Laufe des Betriebs z.B. aufgrund von Schwingungen, zu einer Verschlechterung des Messergebnisses führen.

Dies gilt vergleichbar für die Luftfeder der EP 1 624 278 A1, welche ebenfalls mit einem Sender als Laserstrahlquelle arbeitet, dessen kontinuierliches moduliertes Lichtsignal von einem Reflektor reflektiert und von einem Empfänger erfasst wird.

Eine Aufgabe der vorliegenden Erfindung ist es, eine Luftfeder der eingangs beschriebenen Art bereit zu stellen, so dass eine Positionsbestimmung, eine Höhenbestimmung bzw. eine Bestimmung eines Federwegs einer Luftfeder einfacher, kostengünstiger, robuster und bzw. oder genauer als bisher bekannt durchgeführt werden kann. Zumindest soll eine Alternative zu bekannten Luftfedern geschaffen werden.

Die Aufgabe wird erfindungsgemäß durch eine Luftfeder sowie durch ein Sensorsystem mit den Merkmalen der unabhängigen Patentansprüche gelöst. Vorteilhafte Weiterbildungen sind in den Unteransprüchen beschrieben.

Somit betrifft die vorliegende Erfindung eine Luftfeder mit einem Balg, welcher ein Innenvolumen der Luftfeder zumindest abschnittsweise einschließt.

Die erfindungsgemäße Luftfeder ist gekennzeichnet durch wenigstens ein Sensorsystem mit
- einem akustischen Impulsgeber, welcher angeordnet und ausgebildet ist, akustische Impulse in das Innenvolumen abzugeben,
- einem Schallempfänger, welcher angeordnet und ausgebildet ist, die entsprechenden akustischen Impulsantworten aus dem Innenvolumen zu erfassen, und
- mit einer Steuerungseinheit oder Auswerteeinheit, welche ausgebildet ist, ein Signal, welches die erfassten akustischen Impulsantworten repräsentiert, zu erhalten,
wobei das Sensorsystem, vorzugsweise die Steuerungseinheit oder die Auswerteeinheit, ausgebildet ist,
- aus den erfassten akustischen Impulsantworten das Leistungsdichte-Spektrum der akustischen Impulsantwort zu bestimmen und
- basierend auf dem Leistungsdichte-Spektrum der akustischen Impulsantwort den Federweg des Innenraums zu bestimmen.

Erfindungsgemäß kann somit eine kontaktlose Positionsbestimmung, Höhenbestimmung bzw. Bestimmung des Federwegs einer Luftfeder erfolgen, d.h. es kann auch die eingangs beschriebenen mechanischen Mittel hierzu verzichtet werden. Auch kann auf die Verwendung der eingangs beschriebenen Sensoren verzichtet und somit die dort beschriebenen Nachteile vermieden werden. Gleichzeitig kann die Position, die Höhe bzw. der Federweg der Luftfeder fortlaufend im Betrieb mit ausreichender bzw. mit guter Genauigkeit bestimmt werden.

Der vorliegenden Erfindung liegt dabei die Erkenntnis zugrunde, dass der Innenraum bzw. das geschlossene Innenvolumen einer Luftfeder zur Ausbildung von Schwingungsmoden geeignet ist, welche von der Kontur und damit auch von der Höhe bzw. von der Erstreckung entlang der vertikalen Achse der Luftfeder und damit vom Abstand der beiden endseitigen Platten abhängen. Entsprechend kann erfindungsgemäß ein akustischer Impuls in das Innenvolumen der Luftfeder ausgesendet, dessen akustische Impulsantwort sensorisch erfasst, hieraus dessen Spektrum der Leistungsdichte bestimmt sowie aus dem Spektrum der Leistungsdichte auf den Federweg des Innenraums geschlossen werden.

Gemäß einem Aspekt der Erfindung ist das Sensorsystem, vorzugsweise die Steuerungseinheit oder die Auswerteeinheit, ferner ausgebildet,
- aus den erfassten akustischen Impulsantworten das Leistungsdichte-Spektrum der akustischen Impulsantwort zu bestimmen,
- aus dem Leistungsdichte-Spektrum der akustischen Impulsantwort die Frequenzen typabhängigen Linien auszuwählen,
- die Frequenz- und Werte der Leistungsdichte als Basiskoordinaten (f, p) zu verwenden,
- aus dem gespeicherten Kennfeld die Klasse desjenigen Federweges, dessen Basiskoordinaten den geringsten Abstand zu den gemessenen Koordinaten aufweist, zu ermitteln und
- basierend auf der ermittelten Klasse den Federweg des Innenraums zu bestimmen.

Dies kann eine konkrete Möglichkeit der Umsetzung darstellen.

Gemäß einem weiteren Aspekt der Erfindung ist das Sensorsystem, vorzugsweise die Steuerungseinheit oder die Auswerteeinheit, ferner ausgebildet, den bestimmten Federweg des Innenraums auszugeben. Diese Ausgabe kann an eine Person, beispielsweise mittels einer Anzeige, erfolgen. Diese Ausgabe kann aber auch an ein anderes technisches Gerät bzw. an ein übergeordnetes System bzw. dessen Steuerungseinheit wie beispielsweise an die Steuerungseinheit eines Fahrzeugs erfolgen, um dort verwendet zu werden.

Gemäß einem weiteren Aspekt der Erfindung weist das Sensorsystem einen Temperatursensor auf, welcher ausgebildet ist, die Temperatur des Innenraums zu erfassen, wobei das Sensorsystem ausgebildet ist, die erfasste Temperatur bei dem Bestimmen des Leistungsdichte-Spektrums der akustischen Impulsantwort zu berücksichtigen. Dies kann die Berücksichtigung der aktuellen Temperatur im Innenraum der Luftfeder ermöglichen, um dessen Einflüsse auf die Federhöhe zu kompensieren.

Gemäß einem weiteren Aspekt der Erfindung weist das Sensorsystem einen Drucksensor auf, welcher ausgebildet ist, den Druck im Innenraum zu erfassen, wobei das Sensorsystem ausgebildet ist, den erfassten Druck bei dem Bestimmen des Leistungsdichte-Spektrums der akustischen Impulsantwort zu berücksichtigen.

Dies kann die Berücksichtigung des aktuellen Drucks im Innenraum der Luftfeder ermöglichen, um dessen Einflüsse auf die Federhöhe zu kompensieren.

Die vorliegende Erfindung betrifft auch ein Sensorsystem zur Verwendung in einer Luftfeder wie zuvor beschrieben. Hierdurch kann ein Sensorsystem zur Verfügung gestellt werden, um eine erfindungsgemäße Luftfeder wie zuvor beschrieben umzusetzen.

Mit anderen Worten beruht die erfindungsgemäße Luftfeder bzw. dessen Sensorsystem auf der Tatsache, dass das von der Luftfeder eingeschlossene Luftvolumen ein akustisch schwingungsfähiges System hoher Schwingungsgüte darstellt, dessen Schwingungsmoden von den geometrischen Abmessungen der Luftfeder abhängig sind, insbesondere von der zu schätzenden Federhöhe.

Somit kann erfindungsgemäß die zu schätzende Federhöhe aus den Frequenzen der auftretenden, ortsfesten Schwingungsmoden bestimmt werden, so dass mit Hilfe einer punktuellen Bestimmung des Leistungsdichte-Spektrums der Stehwellen auf die aktuelle, frequenzbestimmende Federhöhe geschlossen werden kann.

Der wesentliche Vorteil des erfindungsgemäßen Verfahrens bzw. der erfindungsgemäßen Luftfeder bzw. dessen erfindungsgemäßen Sensorsystem besteht darin, dass es mit wegen der niedrigen Signalfrequenzen mit kostengünstiger Hardware realisiert werden kann.

Für eine Nutzfahrzeug-Luftfeder mit einer Federhöhe von 0,5 ergibt sich eine Frequenz für die Grundwelle von 27 Hz (f=c/2/pi/4/0,5 = 340m/s/3,14/4/0,5m, berechnet nach der Formel für die Frequenz einer "gedeckten" Orgelpfeife).

Ein weiterer Vorteil besteht darin, dass der Impulsgeber und der Schallempfänger räumlich getrennt voneinander und an frei wählbaren Stellen innerhalb der in der Luftfeder angeordnet werden können.

Als akustischer Impulsgeber eignen sich elektrodynamische und piezo-elektrische Schallwandler, deren Bandbreite die Anregung kurzer Impulse erlaubt (elektrodynamisch, piezo-elektrisch). Auch eine elektrische Funkenentladung kann dazu verwendet werden, akustische Impulse zu setzen.

Als Schallempfänger eigenen sich alle Mikrofone mit einer oberen Eckfrequenz von 3 kHz. Besonders preisgünstig sind MEMS-Mikrofone und Elektret-Mikrofone. Die MEMS-Mikrofone haben den Vorteil, dass sie sehr wenig Bauraum benötigen.

Als Steuerungs- und Recheneinheit können handelsübliche Mikroprozessoren verwendet werden, die häufig mit Analog/Digitalwandler ausgestattet sind.

Da sich die Temperatur der Luft über die Schallgeschwindigkeit auf die Frequenzen der Schwingungsmoden auswirkt, ist ein Temperatursensor vorteilhaft, um Temperatureinfluss zu kompensieren.

Der Luftdruck im Balg wirkt sich auf die Amplituden der akustischen Schwingungen aus. Aus diesem Grund ist ein Drucksensor vorteilhaft.

Ein Ausführungsbeispiel und weitere Vorteile der Erfindung werden nachstehend im Zusammenhang mit den folgenden Figuren erläutert. Darin zeigt:
- Fig. 1: eine schematische Schnittdarstellung einer erfindungsgemäßen Luftfeder;
- Fig. 2: ein schematisches Blockschaltbild eines Sensorsystems der erfindungsgemäßen Luftfeder;
- Fig. 3: mehrere beispielhafte Verteilungen der Schallintensität unterschiedlicher Frequenz-Schwingungsmoden eines "Grand Piano"; und

- Fig. 4: ein beispielhaftes Kennfeld einer Frequenz-Schwingungsmode der erfindungsgemäßen Luftfeder.

Die Beschreibung der o.g. Figur erfolgt in kartesischen Koordinaten mit einer Längsrichtung (nicht dargestellt), einer zur Längsrichtung senkrecht ausgerichteten Querrichtung Y sowie einer sowohl zur Längsrichtung als auch zur Querrichtung Y senkrecht ausgerichteten vertikalen Richtung Z. Die Längsrichtung kann auch als Länge oder Tiefe, die Querrichtung Y auch als Breite Y und die vertikale Richtung Z auch als Höhe Z bezeichnet werden. Die Längsrichtung und die Querrichtung können zusammen auch als Horizontale bezeichnet werden.

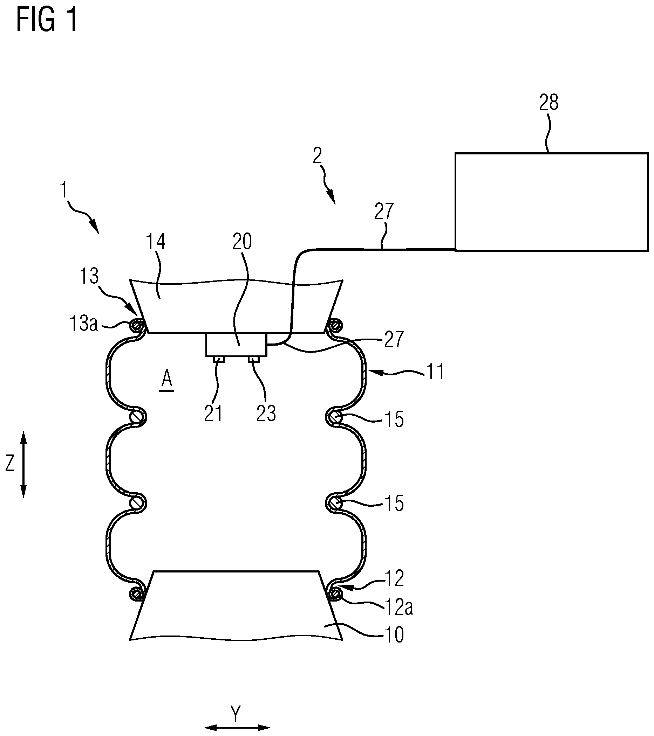

Fig. 1 zeigt eine schematische Schnittdarstellung einer erfindungsgemäßen Luftfeder 1. Die Luftfeder 1 weist einen Kolben 10 auf, welcher bei der Nutzung der Luftfeder 1 feststehend auf einem ersten Bauteil (nicht dargestellt) wie z.B. auf einem Fahrgestell eines Straßenfahrzeugs oder eines Schienenfahrzeuges (nicht dargestellt) angeordnet ist. In der vertikalen Richtung Z gegenüberliegend oberhalb des Kolbens 10 weist die Luftfeder 1 eine Gleitplatte 14 bzw. eine Bördelplatte 14 auf, welche an einem zweiten Bauteil (nicht dargestellt) in Form einer Karosserie des Fahrzeugs (nicht dargestellt) feststehend angeordnet ist. Handelt es sich bei dem Fahrzeug um ein Schienenfahrzeug, so ist eine Gleitplatte 14 vorhanden. Wird ein Straßenfahrzeug betrachtet, so ist eine Bördelplatte 14 vorhanden.

Zwischen dem Kolben 10 und der Gleitplatte 14 bzw. der Bördelplatte 14 ist ein Balg 11 angeordnet, welcher mit seinem unteren Balgende 12 mittels einer Befestigung 12a radial außen anliegend am Kolben 10 befestigt ist. Der Balg 11 ist ferner mit seinem oberen Balgende 13 mittels einer Befestigung 13a radial außen anliegend an der Gleitplatte 14 bzw. an der Bördelplatte 14 befestigt. Der Balg 11 wird dabei von zwei ringförmig geschlossenen Einschnürungselementen 15, welche durch Metallringe 15 und die Befestigungen 12a, 13a gebildet werden und in der vertikalen Richtung Z versetzt zueinander angeordnet sind, in der Form gehalten. Die Luftfeder 1 weist somit einen Faltenbalg 11 auf, dessen Bewegung aus der Stauchung der Falten resultiert, welche durch die Metallringe 15 gebildet werden. Das innerhalb des Balgs 11 eingeschlossene Luftvolumen A, welches konstant oder veränderlich sein kann, bewirkt die federnde Wirkung des Luftfeder 1 zwischen dem Fahrgestell und der Karosserie.

Erfindungsgemäß ist ferner ein Sensorsystem 2 vorhanden, welches eine Leiterplatte 20 aufweist, welche innerhalb des Innenvolumens A in der vertikalen Richtung Z von unten an der Gleitplatte 14 bzw. an der Bördelplatte 14 angeordnet ist. Die Leiterplatte 20 ist über ein Kabel 27 durch die Gleitplatte 14 bzw. durch die Bördelplatte 14 hindurch mit einer Auswerteeinheit 28verbunden.

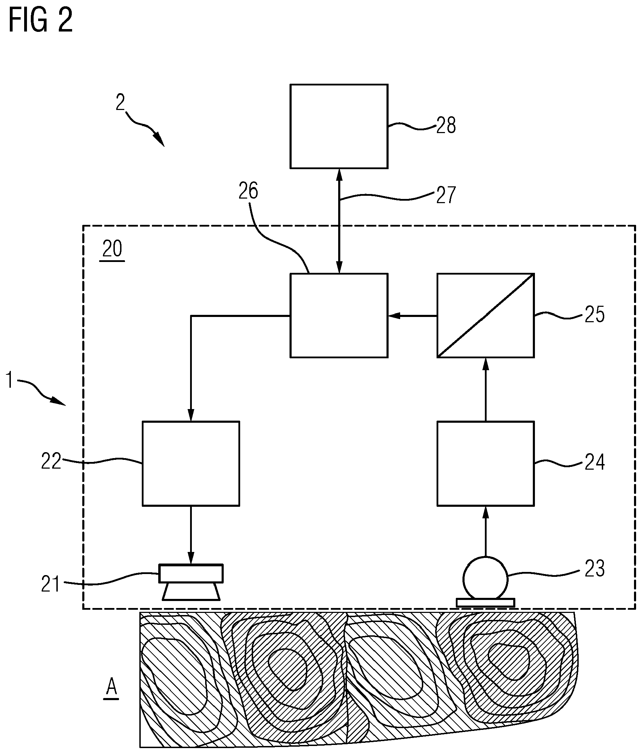

Wie in den Figuren 1 und 2 dargestellt, weist die Leiterplatte 20 einen akustischen Impulsgeber 21 auf, welcher schallabgebend in das Innenvolumen A der Luftfeder 1 gerichtet ist. Dabei ist dem akustischen Impulsgeber 21 eine Verstärkereinheit 22 vorgeschaltet, um Signale zum akustischen Impulsgeber 21 hin zu verstärken.

Die Leiterplatte 20 weist ferner einen Schallempfänger 23 auf, welcher parallel zum akustischen Impulsgeber 21 in einem festen Abstand angeordnet und ausgerichtet ist, Schallwellen vom Innenvolumen Ader Luftfeder 1 zu empfangen und in ein elektrisches analoges Signal zu wandeln. Dem Schallempfänger 23 ist eine Filter-/Verstärkereinheit 24 nachgeordnet, um das elektrische analoge Signal zu verstärken und anschließend zu filtern. Das gefilterte, verstärkte elektrische analoge Signal wird dann einem Analog-Digitalwandler 25 zugeführt und digitalisiert.

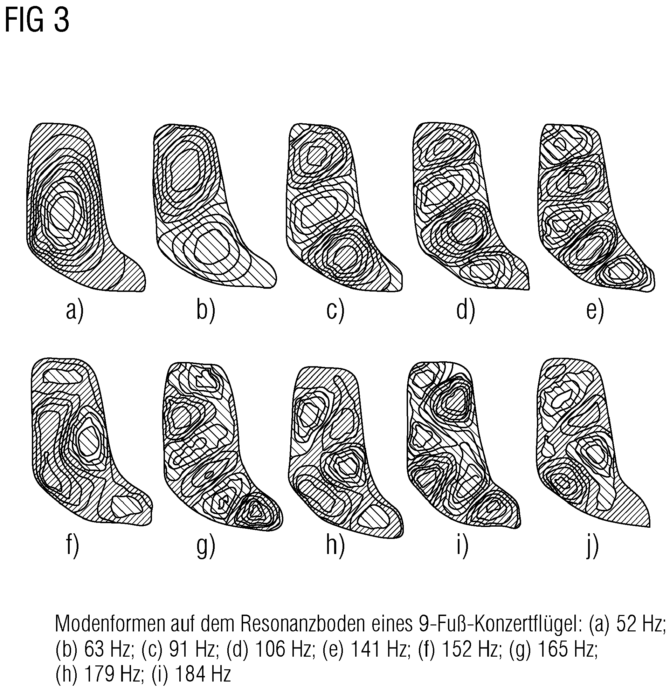

Das digitale Signal wird anschließend einer Steuerungseinheit 26 zugeführt, um von dort aus über das Kabel 27 an die Auswerteeinheit 28 übertragen zu werden. Dies kann alternativ auch drahtlos erfolgen. In jedem Fall kann seitens der Auswerteeinheit 28 die gesamte Elektronik auf der Leiterplatte 20 innerhalb der Luftfeder mit elektrischer Energie versorgt und betrieben bzw. gesteuert werden. Wie die Figur 3 zeigt, bilden sich in unregelmäßig geformten Körpern wie z.B. dem Resonanzboden eines "Grand Piano" bei Anregung durch unterschiedliche Frequenzen Schwingungsmoden mit räumlich unterschiedlicher Verteilung der Schallintensität aus.

Entsprechend kann erfindungsgemäß der akustische Impulsgeber 21 ein lokales akustisches Signal erzeugen bzw. aussenden, welches sich im Innenvolumen A der Luftfeder 1 in Anhängigkeit der Federhöhe bzw. der Höhe entlang der Längsachse Z sowie der Form bzw. Kontur des Balgs 11 ausbreitet und reflektiert wird. Der Schallempfänger 23 kann diese Reflektion erfassen und in das bereits erwähnte elektrische analoge Signal wandeln, welcher dann digitalisiert und der Steuerungseinheit 26 der Leiterplatte 20 bzw. der Auswerteeinheit 28 des Sensorsystems 2 zur Verfügung gestellt werden kann.

Dort, d.h. entweder seitens der Steuerungseinheit 26 oder der Auswerteeinheit 28, kann eine Aufzeichnung der Daten über einen definierten Zeitraum erfolgen. Aus diesen Daten kann dann ein Leistungsdichte-Spektrum und hieraus die entsprechende Klasse für den Federweg bestimmt werden, wie weiter unten näher erläutert wird. Erfolgt dies seitens der Steuerungseinheit 26, kann das Ergebnis an die Auswerteeinheit 28 übertragen werden.

Aufgrund der typbedingten Unterschiede bezüglich der geometrischen Abmessungen von Luftfedern 1 sowie der Unterschiede der Anordnung des akustischen Impulsgebers 21 und des Schallempfängers 23, auch aufgrund von Fertigungs- und Montagetoleranzen, erfolgt die Zuordnung zwischen den Daten der akustischen Messung (Frequenzen, Leistungsdichten) und der Federhöhe mit Hilfe einer Kalibrierung gemäß den folgenden Schritten. Dazu wird der mögliche Federweg der Luftfeder in Klassen aufgeteilt.

Für alle Klassen des Federweges werden die folgenden Schritte wiederholt:
1. Stelle die Federweg auf den Mittelwert der jeweiligen Klasse ein.
2. Rege die eingeschlossene Luft durch einen kurzen Schallimpuls an.
3. Taste das elektrische Signal des lokalen Schallsignals ab und speichere dessen Spannungswerte.
4. Berechne aus den gespeicherten, zeitdiskreten Spannungswerten das Leistungsdichte-Spektrum.
5. Wähle aus dem Spektrum eine definierte Anzahl charakteristischer Linien mit den entsprechenden Werten der Leistungsdichte.
6. Speichere die Leistungsdichten und die ausgewählten Frequenzen als Basiskoordinaten (f, p).
7. Ordne den Basiskoordinaten die aktuelle Klasse (z) dem Federweg zu.
8. Speichere den dreidimensionalen Datensatz in einem Kennfeld. Abschließend:
9. Speichere das Kennfeld dauerhaft für den Zugriff während der Messung.

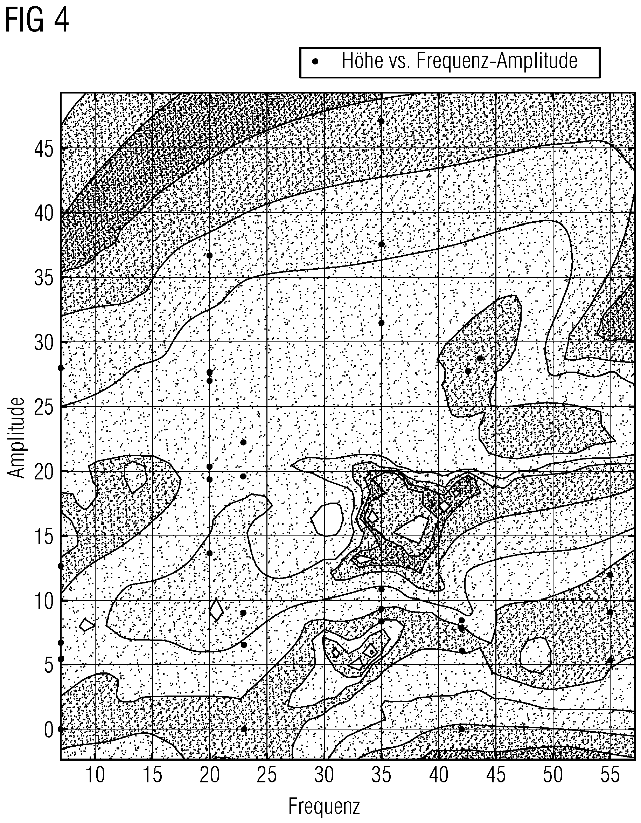

Die Figur 4 zeigt beispielhaft ein Kennfeld, das aus den Werten von sechs Linien des Spektrums berechnet wurde. Die einzelnen Flächen mit derselben (Farb-) Schattierungen gehören zu jeweils einer Klasse der Federhöhe.

Die Messung während des Betriebs der Luftfeder 1 durchläuft folgende Schritte:
1. Rege die Luft im Federbalg durch einen kurzen Schallimpuls (t<1Millisekunde) an
2. Taste das elektrische Signal der akustischen Impulsantwort ab und speichere dessen Spannungswerte temporär
3. Berechne aus den gespeicherten Spannungswerten das Leistungsdichte-Spektrum akustischen Impulsantwort
4. Wähle aus dem Leistungsdichte-Spektrum die Frequenzen der typabhängigen Linien.
5. Verwende die Frequenz- und Werte der Leistungsdichte als Basiskoordinaten (f, p)
6. Ermittle aus dem gespeicherten Kennfeld die Klasse des Federweges, deren Basiskoordinaten den geringsten Abstand zu den gemessenen Koordinaten aufweisen.
7. Gib den ermittelten Wert des Federweges aus.

Auf diese Art und Weise kann die Federhöhe im Betrieb einfacher als bisher bekannt bestimmt werden.

### Bezugszeichenliste (Teil der Beschreibung)

- A: Innenvolumen der Luftfeder 1

- Y: Querrichtung; Breite
- Z: vertikale Richtung; Höhe

- 1: Luftfeder
- 10: Kolben
- 11: Balg; Faltenbalg
- 12: unteres Balgende
- 12a: Befestigung des unteren Balgendes 12
- 13: oberes Balgende
- 13a: Befestigung des oberen Balgendes 13
- 14: Gleitplatte; Bördelplatte; Anschlussplatte
- 15: Einschnürungselemente; Metallringe

- 2: Sensorsystem
- 20: Leiterplatte
- 21: akustischer Impulsgeber der Leiterplatte 20
- 22: Verstärkereinheit des akustischen Impulsgebers 21
- 23: Schallempfänger
- 24: Filter-/Verstärkereinheit des Schallempfängers 23
- 25: Analog-Digitalwandler des Schallempfängers 23
- 26: Steuerungseinheit der Leiterplatte 20
- 27: Kabel
- 28: Auswerteeinheit

## Patentansprüche

1. Luftfeder (1)
mit einem Balg (11), welcher ein Innenvolumen (A) der Luftfeder (1) zumindest abschnittsweise einschließt,
**gekennzeichnet durch**
wenigstens ein Sensorsystem (2) mit
• einem akustischen Impulsgeber (21), welcher angeordnet und ausgebildet ist, akustische Impulse in das Innenvolumen (A) abzugeben,
• einem Schallempfänger (23), welcher angeordnet und ausgebildet ist, die entsprechenden akustischen Impulsantworten aus dem Innenvolumen (A) zu erfassen, und
• mit einer Steuerungseinheit (26) oder Auswerteeinheit (28), welche ausgebildet ist, ein Signal, welches die erfassten akustischen Impulsantworten repräsentiert, zu erhalten,
wobei das Sensorsystem (2), vorzugsweise die Steuerungseinheit (26) oder die Auswerteeinheit (28), ausgebildet ist,
• aus den erfassten akustischen Impulsantworten das Leistungsdichte-Spektrum der akustischen Impulsantwort zu bestimmen und
• basierend auf dem Leistungsdichte-Spektrum der akustischen Impulsantwort den Federweg des Innenraums (A) zu bestimmen.

2. Luftfeder (1) nach Anspruch 1,
wobei das Sensorsystem (2), vorzugsweise die Steuerungseinheit (26) oder die Auswerteeinheit (28), ferner ausgebildet ist,
• aus den erfassten akustischen Impulsantworten das Leistungsdichte-Spektrum der akustischen Impulsantwort zu bestimmen,
• aus dem Leistungsdichte-Spektrum der akustischen Impulsantwort die Frequenzen typabhängigen Linien auszuwählen,
• die Frequenz- und Werte der Leistungsdichte als Basiskoordinaten (f, p) zu verwenden,
• aus dem gespeicherten Kennfeld die Klasse desjenigen Federweges, dessen Basiskoordinaten den geringsten Abstand zu den gemessenen Koordinaten aufweist, zu ermitteln und
• basierend auf der ermittelten Klasse den Federweg des Innenraums (A) zu bestimmen.

3. Luftfeder (1) nach Anspruch 1 oder 2,
wobei das Sensorsystem (2), vorzugsweise die Steuerungseinheit (26) oder die Auswerteeinheit (28), ferner ausgebildet ist, den bestimmten Federweg des Innenraums (A) auszugeben.

4. Luftfeder (1) nach einem der vorangehenden Ansprüche,
wobei das Sensorsystem (2) einen Temperatursensor aufweist, welcher ausgebildet ist, die Temperatur des Innenraums (A) zu erfassen,
wobei das Sensorsystem (2) ausgebildet ist, die erfasste Temperatur bei dem Bestimmen des Leistungsdichte-Spektrums der akustischen Impulsantwort zu berücksichtigen.

5. Luftfeder (1) nach einem der vorangehenden Ansprüche,
wobei das Sensorsystem (2) einen Drucksensor aufweist, welcher ausgebildet ist, den Druck im Innenraum (A) zu erfassen,
wobei das Sensorsystem (2) ausgebildet ist, den erfassten Druck bei dem Bestimmen des Leistungsdichte-Spektrums der akustischen Impulsantwort zu berücksichtigen.

6. Sensorsystem (2) zur Verwendung in einer Luftfeder (1) nach einem der vorangehenden Ansprüche.
